# EUROPEAN PATENT APPLICATION

(11) **EP 2 672 712 A1**
(43) Date of publication of application: **11.12.2013**
(21) Application number: 12305650.9
(22) Date of filing: 07.06.2012
(51) Int. Cl.: H04N 9/67, H04N 1/60

(54) **Scene-dependent color gamut mapping**

(71) Applicant: Thomson Licensing, 92130 Issy-les-Moulineaux (FR)
(72) Inventor: Morvan, Patrick, 35576 Cesson-Sevigne (FR); Stauder, Jurgen, 35576 Cesson-Sevigne (FR); Wang, Xingbo, 35576 Cesson-Sevigne (FR)
(74) Representative: Ruellan-Lemonnier, Brigitte

(57) **Abstract**

The method comprises the steps of dividing a video content into a plurality of successive scenes, and, for each of said scenes, determining a corresponding scene-based source color gamut such that it comprises all representative source colors that are defined as being representative of all source colors of all images comprised in this scene, and mapping source colors of all images of this scene from its corresponding scene-based source color gamut into target colors such that they are included in a predetermined target color gamut.

## Description

### Technical Field

The invention relates to a method for colour mapping of a video content.

### Background Art

Images of video content as those produced for cinema or television or images of photography need to be reproduced on different display devices, including projectors, printers and direct view display devices. In cinematic post-production, differences between the proof viewing display devices (for example a PC monitor screen) and the final reproduction display devices (for example a digital projector) may lead to errors in color reproduction. These differences can include changes of hue, changes of saturation, changes of contrast, changes of intensity, changes of dynamic range, and changes of color gamut. Similar problems occur in photography and publishing, where images are displayed on monitors and later printed on paper. Another example of such colour reproduction errors is TV broadcast where images from multiple sources such as pre-recorded media and field production are broadcasted in multiple ways such as through television broadcast network and through Internet. TV broadcast content is intended to be reproduced on display devices having a reference colour gamut according to the standard ITU-R BT.709. For instance, when the target display colour gamut is smaller than ITU-R BT.709 reference color gamut under which the video content is broadcasted, color artifacts will result. Such color artifacts are generated, for example, if the content is reproduced on mobile display devices with poor color rendering capabilities. As a result, image details might be lost, colors might be clipped or colors may be shifted.

Color Management System (CMS) is a general solution for these problems. To implement CMS, the color characteristics of a first display device (source) and of a second display device(target) are measured, mathematically modelled and then compensated by using a color transformation. Color management may be aimed at colorimetric or non-colorimetric color reproduction. Colorimetric color reproduction aims to reproduce a color on a target display device such that its colorimetry is identical or as close as possible to the colorimetry of a reference display device. A color is generally measured in the CIE colorimetric color space by using trichromatic XYZ values. Color gamut mapping is generally performed in a perceptual color space, as Lab color space for example by converting XYZ values to Lab values for example. This operation by principle, involves non-colorimetric color reproduction since at least some of the source colors are mapped onto different target colors. Non-colorimetric color reproduction can be guided by a series of criteria, compensating the loss of correct colorimetry. One criterion that guides such color gamut mapping can be to achieve the same or a close color appearance. Such color appearances can be measured by a color appearance model, for example the CIECAM-02 of the CIE. Those models use so-called perceptually constant color spaces that have axes for intensity, hue and saturation of colors. Another criterion can be to preserve either specifically the contrast, or the saturation of colors. Still another criterion can be to come as close as possible to colorimetric color reproduction. The weight of one or more criteria can be adapted dynamically for instance as disclosed in the patent application WO2005/109854. In this document, RGB values are analysed and correction factor are dynamically calculated but without taking account perceptual behaviour of human eye (as in the Lab color space) or without taking account boundary defined by source and target color gamut.

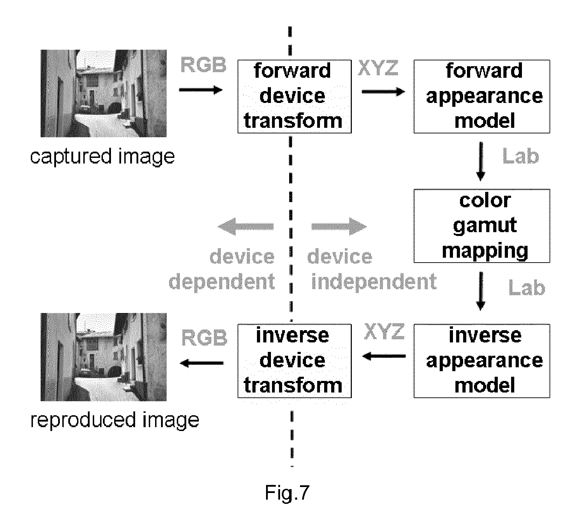

Most of Color Management System (CMS) are bases on a workflow as the workflow illustrated on figure 7.

According to this workflow, first, a forward device color transform converts device dependent color image data, e.g. RGB values, into device independent color data, e.g. XYZ values.

The forward device color transform requires knowledge about the color characteristics of the image-capture device. This process is inversed by an inverse device color transform adapted to the display device that produces display device dependent color data, e.g. again RGB values, that ensures the exact reproduction of the color defined by the device independent color data.

Then, a forward appearance color model converts for any psycho-visual effects such that resulting color data corresponds to what a human spectator perceives. (A human spectator perceives differently from that which an objective measuring tool such as a densitometer would measure.) This process is inversed by an inverse appearance color model that reproduces absolute, objective color data.

Finally CMS takes into account the color gamuts of the display devices. A color gamut describes the totality of reproducible colors of a display device. When an image to reproduce contains colors outside of the color gamut of a display device or close to the border of its color gamut, the colors might not be able to be reproduced on the display device. As mentioned, a specific color transform called "color gamut mapping" is used to map colors into the color gamut of the display device to be able to reproduce them. The simplest known method of color mapping is to shift the color to the nearest position on the boundary of the color gamut of the display device. This method is known as Minimum-delta-E-clipping. Color gamut mapping is generally more complex and may use for instance compression techniques in a specific manner.

Color gamut mapping ensures that the mapped colors are inside the gamut of a target display device. In general, color gamut mapping can be applied to any source colors that are located within a source color gamut in order to transform them such that, after mapping, they are included in a target color gamut. The source color gamut can be linked to an image capture device such as a camera or a scanner. It can be linked to a reference display device such as a proof view display device. It can also be linked to a predefined color gamut such as the color gamut defined in the standard ITU-R BT.709. The target color gamut can be linked to a target display device such as the aforementioned reproduction device. It can be linked also to a predefined color gamut adapted or standardized for transmission, compression or storage purposes, for example. It can also be linked to a medium such as film or paper prints. In the following we will simplify the matter by talking about a source display device with a source color gamut and a target display device having a target color gamut. The word "destination" may also be used instead of "target".

Color management as described above can be applied to a sequence of video frames, to a single video frame, to still images or even to parts of an image, e.g. an object of an image. This invention focuses on the case where color correction is applied to a video content.

Known methods of color gamut mapping can be classified according to the choice of color gamuts between which a color is mapped into three categories: device-dependent methods, image-dependant methods, and video dependent methods.

Device-dependent color gamut mapping methods aim to map all colors from a source device color gamut into a target device color gamut. Known methods try to find a compromise between loss in color contrast and loss in color saturation. Colors are for instance mapped along straight lines in a given color space. Often, all mapping lines converge to one or more so called anchor point(s). For example, these anchor points can be chosen according to the shape of the target device gamut as described by Montag and Fairchild in their paper entitled "Gamut mapping: Evaluation of chroma clipping techniques for three destination gamuts" published in 1998 at the IS&T/SID Sixth Color Imaging Conference in Scottsdale. The way colors mapped along such mapping lines can be a linear compression, clipping, or more complex, non-linear functions. For example, Braun and Fairchild suggest in their publication entitled "Image Lightness Rescaling Using Sigmoidal Contrast Enhancement Functions" published in 1999 in the Proceedings of SPIE Electronic Imaging Conference (EIí99) a non-linear, S-shaped function.

Image-dependent gamut mapping methods aim to map all colors from an image color gamut into the target device color gamut. An image color gamut is defined by the colors of the image to be mapped, and contains all colors that are present in this image. Often, frameworks for image-dependent gamut mapping apply the same methods as for device-dependent gamut mapping while replacing the source device color gamut by the image color gamut. For example, Giesen et al. investigated in their paper entitled "Image-Dependent Gamut Mapping as Optimization Problem", published in the IEEE Transactions on Image Processing in Vol. 16 no. 10 in October 2007, image-dependent mapping using different image gamut representations (convex hull and star-shaped gamut) as well different color mappings (linear or non-linear compression).

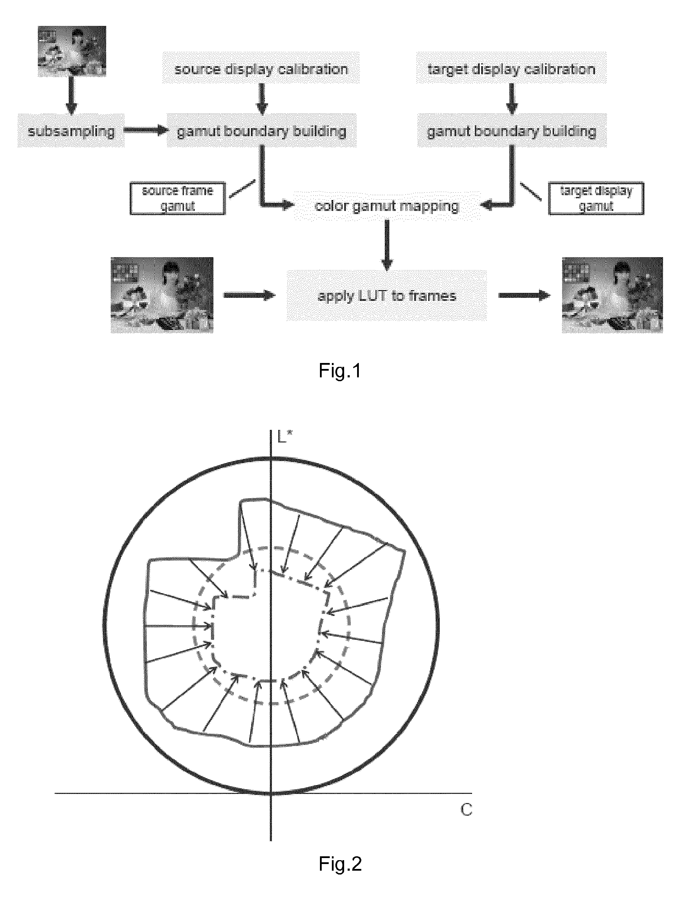

As explained by Asaf Golan and Hagit Hel-Or in their article entitled "Novel workflow for image-guided gamut mapping", published in Jul-Sep 2008 in Journal of Electronic Imaging 17(3), 033004, image-dependent gamut mapping methods can bring better accuracy than device-dependent gamut mapping methods. Figure 1 shows how image-dependent color gamut mapping can be applied in a straight forward way to a video sequence. In order to reduce the computational cost, each frame of this video sequence is subsampled, and then is sent to a module that builds and calculates the boundary of the color gamut of the frame. This process is replicated for each frame of the video sequence.

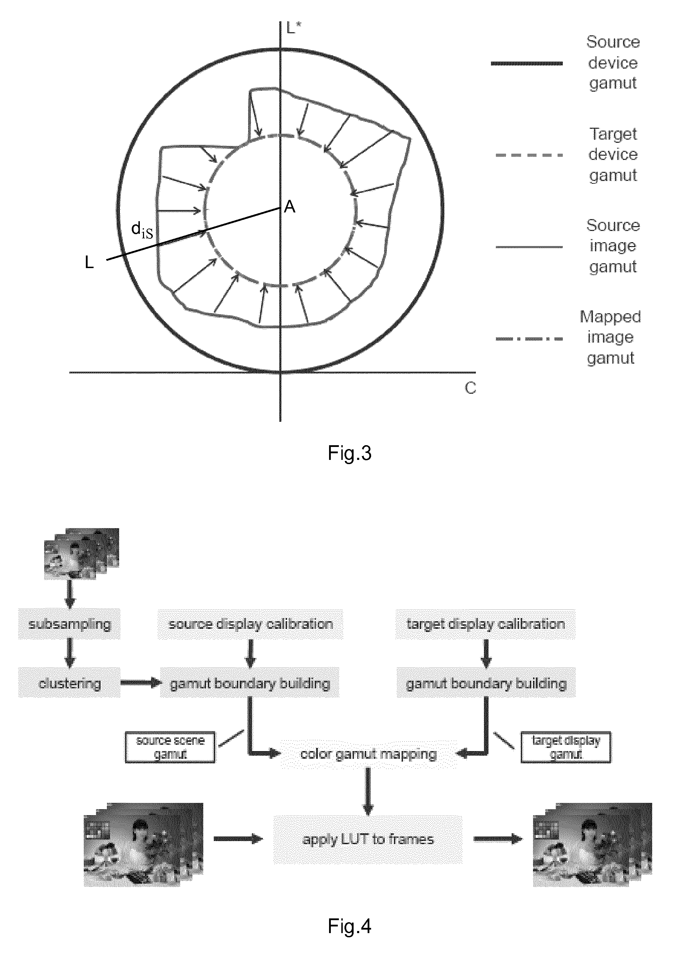

Figures 2 and 3 demonstrate the situation of device-dependent and image-dependent gamut mapping respectively. Figure 2 shows that the device-dependent approach results in insufficient utilization of the target device gamut (i.e. inner circle limited by dotted line). This drawback is overcome by image-dependent gamut mapping as illustrated on figure 3. However one inherent difficulty of gamut mapping from an image color gamut to a target device color gamut is to keep - at least to one extent - the shape of the image color gamut.

Using image gamut as the source gamut may be appropriate and beneficial to still images. But applying image-dependent gamut mapping to video content straight forward may produce side effects. Two successive frames of a video content may bear nearly the same objects/contents, with minor color differences from one frame to the next one. But, if these minor differences happen in high chroma, the shape of the image color gamut may be altered from frame to frame. Therefore, the image-dependent gamut mapping procedure will also be affected, thus changing the way the colors of same objects are rendered from one frame to the next one. That is to say, those colors of objects that originally are the same in two successive frames are likely to become different after being color gamut mapped. This change of colors between frames may be perceived as flicker when the color mapped video content is displayed, therefore disturbing the rendering of the video content.

Concerning video-dependent gamut mapping, patent publication WO 2008/072162 discloses a method for processing color image data of a video content to be displayed on a target display device comprising the following steps:
- Real time video analysis (negative values analysis) of the video content;
- Calculation of multiple corrections for each frame, notably a correction factor for an adaptative color mapping and a correction factor for a adaptative contrast boosting;
- Application of the above corrections to the colors of each frame of the video content.

Temporal adjustment is performed by IIR filter to avoid oscillation in color gamut mapping unit.

This method analyses device dependent values (RGB). The over or under flowing mapped RGB values are analysed and correction factor are dynamically calculated. But this method is not accurate enough because mapping is not done in perceptual color space (e.g., CIE L*a*b*). Furthermore it does not take into account neither source gamut boundary nor target gamut boundary in a perceptual color space.

### Summary of invention

The invention concerns a new video-dependent mapping technique that is scene-dependent instead of being frame-dependent.

Seeing that image-dependent color gamut mapping approach applied straightforward to each frame or image of a video content is not appropriate, the temporal consistency of colors among frames becomes critically important. A close examination shows that a video content is generally composed of a large number of scenes. In post production of video content, scenes are selected from footage and recombined to compose a video content according to the synoptic outline. A scene contains frames that look quite similar to each other, however the frames of different scenes are very often distinct from each other. In order to avoid shift of colors within one scene introduced by frame-based color gamut mapping, the invention propose to apply the same color gamut mapping to each frame or image of a same scene, with the possibility to apply different color gamut mapping to different scenes. Such a new method is still an image-dependent color gamut mapping method, wherein the image color gamut is derived from all frames or images of a same scene. This new method is then called "scene-dependent color gamut mapping".

For this purpose, the subject of the invention is a method of color gamut mapping source colors of images of a video content into target colors, comprising the steps of:
- dividing said video content into a plurality of successive scenes;
- for each of said scenes, determining a corresponding scene-based source color gamut such that it comprises all representative source colors that are defined as being representative of all source colors of all images comprised in said scene and such that its boundary correspond to the maxima of said representative source colors;
- for each of said scenes, mapping source colors of all images of said scene from its corresponding scene-based source color gamut into target colors such that they are included in a predetermined target color gamut.

The advantages of the invention are notably, when a video content is color mapped according to this method then displayed using a target display device characterized by this predetermined target color gamut :
- No flicker is generated from frame to frame during this display;
- The colors of a frame do not change with time during the display of the video content.

The boundary of each scene-based source color gamut corresponding to a scene is then a surface, generally the smallest possible, that joins the different maxima of the representative source colors selected to represent the different pixels and/or the different source colors of all the images included in this scene. These maxima correspond to the representative source colors that are located the furthest away from the origin of the color space in which said mapping of source colors is performed, this origin being the black color. Represented in this color space, these maxima correspond to the outer periphery of the group of representative source colors.

If the computerized resources are large and quick enough, each source color may be its own representative color. If it is not the case, a method should be implemented to group the pixels and/or the source colors of all images of each scene such as to be able to assign to each group a representative colors. Only the representative colors will then be considered to determine each scene-based source color gamut.

Preferably, the step of dividing said video content into successive scenes is performed through scene cuts detection.

Preferably, for the determination of scene-based source color gamut, a step of subsampling the pixels of all images included in said scene is added.

Preferably, the method comprises a step of color clustering the source colors of the pixels of all images, or, if subsampled, of the subsampled pixels of all images including the scene such as to define source color clusters for said scene, each source color cluster having a cluster centered color defined as being positioned at the center of this source color cluster, wherein the determination of scene-based source color gamut is performed such that it comprises all cluster centered colors of defined source color clusters of said scene and such that its boundary corresponds to the maxima of these cluster centered colors. Such maxima are located the furthest away from the origin of the color space in which the mapping of source colors is performed.

Preferably, said color clustering is of the partitional type.

Preferably, the color mapping of the method according to the invention is performed in a perceptually-uniform color space, such as CIE Lab or CIE CAM02 color space.

Preferably, in the method according to the invention,
- said color mapping of each source color is performed along a mapping line anchored on an anchor point located on the grey line of said color space,
- for each of said scenes, the step is added of determining a scene-based target color gamut such that, on any mapping line anchored on an anchor point, the source color boundaries distribution of the positions of the boundaries of all scene-based source color gamut on said mapping line between a minimum distance from the anchor point and a maximum distance from the anchor point being determined, the positions of the boundaries of all scene-based target color gamut are distributed on said mapping line between said minimum distance from the anchor point and a maximum distance corresponding to the distance between said anchor point and the intersection of the boundary of the target color gamut on said mapping line, such that the target color boundaries distribution that is obtained on said mapping line is homothetic to said source color boundaries distribution, and
- for each of said scenes, said color mapping of each source color is performed such that the target colors are included in the determined scene-based target color gamut corresponding to said scene.

All distances above, considered with respect to a mapping line, are measured along this mapping line.

An object of the invention is also color gamut mapping device adapted to map source colors of images of a video content into target colors, comprising:
- means for dividing said video content into a plurality of successive scenes;
- means for determining, for each of said scenes, a corresponding scene-based source color gamut such that it comprises all representative source colors that are defined as being representative of all source colors of all images comprised in said scene and such that its boundary correspond to the maxima of said representative source colors;
- means for mapping, for each of said scenes, source colors of all images of said scene (Si) from its corresponding scene-based source color gamut into target colors such that they are included in a predetermined target color gamut.

### Brief description of drawings

The invention will be more clearly understood on reading the description which follows, given by way of non-limiting example and with reference to the appended figures in which:
- Figure 1 illustrates a simplified diagram of the color gamut mapping method according to the prior art,
- Figure 2 illustrates a device-dependent color gamut mapping method,
- Figure 3 illustrates an image-dependent color gamut mapping method,
- Figure 4 illustrates a simplified diagram of the color gamut mapping method according to the invention,
- Figure 5 represents the distribution of the positions of the boundaries of all scene-based source color gamut on a mapping line that is used to implement an embodiment of a specific improvement of the invention,
- Figure 6 represents the distribution of the positions of the boundaries of all scene-based target color gamut on the same mapping line as used for figure 5 according to the same embodiment of a specific improvement of the invention,
- Figure 7 represents a flowchart of a usual color gamut mapping method according to the prior art.

The functions of the various elements shown in the figures may be provided through the use of dedicated hardware as well as hardware capable of executing software in association with appropriate software.

### Description of embodiments

Let us assume we have a source display device and a target display device. As non limiting examples, these display devices can be a LCD, a PDP (plasma display panel), a projection display device based on DLP, LCOS or LCD, an OLED display device, or a CRT. The source display device can be a virtual display device, as a standard one for instance according to the ITU 709. Preferably, these display devices are color calibrated in a manner known per se.

In a manner known per se, after the optional calibration, a target color gamut is built in a manner known per se corresponding to all colors that the target display device can actually display.

Let us assume we have a video content which is specially mastered to be displayed by the source display device. In order to display properly this video content using the target display device, the colors representing the images of the video content should be mapped in the target color gamut.

The invented method for color gamut mapping of this video content into a target color gamut comprises the following steps :
1. Dividing the video sequence into a plurality of scenes;
2. Calculating a scene-based color gamut for each of said scenes;
3. For each of said scenes, mapping all colors of images of said scene from its corresponding scene-based color gamut into the target color gamut;

The first step of the method according to the invention is preferably implemented by scene cut detection. Various algorithms have been proposed in video indexing literature to detect scene cuts in video documents, all of which rely on comparison of successive frames or images with some fixed or dynamic threshold on either pixel, edge, block, or frame level. This requires generally computing an appropriate metric that characterizes the change in video content between two frames and a threshold to determine whether the change is large enough for the frame to be defined as a scene cut between two successive scenes. In their article entitled "A survey on the automatic indexing of video data", published in the Journal of Visual Communication and Image Representation, 10(2), pp. 78-112, Brunelli et al. has an extensive overview of different scene cut detection methods that can be implemented to perform this first step.

Scene cut detection may be more difficult where the transition between two successive scenes is gradual. In this situation, comparison between successive frames is insufficient. Zhang et al addressed these issues in their article entitled "Automatic partitioning of full-motion video.", published in January 1993 in Multimedia Systems, 1(1), pp. 10-28. They introduced the twin-comparison approach, using a dual threshold that accumulates significant differences to detect gradual transitions. Other methods of scene cut detection are discussed by Brunelli et al. in their paper entitled "A survey on the automatic indexing of video data", already quoted above. These other methods can be categorised into three groups. A first group concern so-called "plateau scene cut detection methods" that uses every k-th frame. A second group is based on effect modelling, where video production-based mathematical models are used to spot different edit effects using statistical classification. A third group models the effect of a transition upon intensity edges in subsequent frames.

After having applied any of the above scene cut detection methods to the video content to map, all frames or images comprised between two successive detected scene cuts are considered as belonging to a same scene, and any of two frames of the video content that are separated by a detected scene cut are considered as belonging to different scenes. Therefore, a division of the video content into a plurality of successive scenes S1, S2, ..., Si, ..., S_{N} is obtained.

The second step of the method according to the invention is the determination of a scene-based source color gamut for each scene. The determination of a color gamut is generally performed through the determination of its boundary. Such a determination for a scene needs generally to compute all source colors of all images or frames in this scene.

The computation of all pixels and source colors of each image of the video content requires generally high computering resources and/or long durations of processing that may not be compatible with usual video processing circumstances.

In order to reduce the computational cost and/or the processing time, preferably only a reduced number of pixels in each image and/or a reduced number of source colors of a scene are considered to determine a scene-based source color gamut for each scene. The source colors which are actually used for this determination are selected among all pixels of the images and/or among all source colors as the most representative of the pixels and/or of the source colors. The determination of a scene-based source color gamut corresponding to a given scene is then performed such that all representative source colors that have been selected as the most representative are included in this scene-based source color gamut and such that the boundary of this scene-based source color gamut corresponds to the maxima of the representative source colors that have been selected. In the color space of color mapping, such maxima are positioned by definition at the boundary of the group of all these representative source colors.

In order to reduce the number of pixels in each frame or image that will be considered for the determination of the scene-based source color gamuts, the frames or images of each scene are preferably subsampled, for instance by a factor of 100. It means that only the remaining colors are used for further processing : for instance, 1/100 of the pixels of each image are considered for further processing. The subsampling is preferably performed without any filtering process in order not to introduce artificial colors, and, as a matter of fact, colors that are not subsampled will not be taken into account for the determination of the boundary of the scene-based source color gamut. For this reason, subsampling ratio should be carefully determined to strike a fair balance between computational complexity and accuracy. As an example of such a subsampling, if the images of a video content are formatted as 1920x1080 HDTV, i.e. with about 2million pixels each, each image can be subsampled by a factor 100 to get 100 subimages at the format 192x108, i.e. about 20.000 pixels each. For each line among 10 lines, we take one pixel among 10 pixels.

Due to the large amount of color data of all frames or images for each scene, subsampling of colors may be not sufficient for reducing enough the number of colours used for further processing while keeping interesting colours. In order to further reduce the number of source colors of each scene that will be considered for the determination of the corresponding scene-based source color gamut, a selection of the most representative source colours of this scene is advantageously performed. Such a selection of the most representative colours may also be used without previous subsampling.

The determination of the most representative colors of a scene is advantageously realised with the help of color clustering methods as defined hereinafter.

A key element in data analysis procedures involving cluster analysis is the organization of a given collection of unlabelled patterns into meaningful clusters based on similarity. In the article entitled "Data clustering: A review", published in September 1999 in ACM Computing Surveys, 31 (3), pp. 264-323, a wide spectrum of techniques for cluster formation is proposed. According to this review, there are two types of clustering algorithms, i.e. hierarchical and partitional algorithms, in accordance with the pattern of the outcome. Partitional clustering algorithms have advantages over hierarchical methods in applications involving large data sets. The partitional techniques usually produce clusters by optimizing a criterion function. The most intuitive and frequently used criterion function in partitional clustering techniques is the squared error criterion. The k-means is the simplest and most commonly used algorithm employing a squared error criterion. It starts with a random initial partition and keeps reassigning the patterns to clusters based on the similarity between the pattern and the cluster centres until a convergence criterion is met. The k-means algorithm is popular because it is easy to implement, and its time complexity is O(n), where n is the number of patterns. A major problem with this algorithm is that it is sensitive to the selection of the initial partition and may converge to a local minimum of the criterion function value if the initial partition is not properly chosen.

After the step of color clustering as explained above, a center is determined and positioned for each color cluster. The center of a color cluster is defined as the center of gravity of all the source colors used to determine this color cluster, with the same weight for each of these source colors. A color value corresponds to this center, which is called a cluster centered color.

The determination of the scene-based source color gamut G_{Si-source} corresponding to each scene Si is performed such that as it comprises all centres of the defined source color clusters of this scene Si and such that its boundary corresponds to the maxima of the corresponding cluster centered colors. The boundary of each scene-based source color gamut corresponding to a scene is then a surface, generally the smallest possible, that joins the different maxima of the cluster centered colors selected to represent the different pixels and the different source colors of all the images included in this scene. These maxima correspond to the centers that are located the furthest away from the origin of the color space in which the mapping of source colors will be performed. Represented in this color space, these maxima correspond to the outer periphery of the group of centers of color clusters. The well-known so-called "convex hull method" can be used for the calculation of these boundaries. Different methods are for instance described at : Wikipedia http://en.wikipedia.org/wiki/Convex hull algorithms. As a good example of this method, see notably: Tim Lambert, "Interactive Java demos of convex hull algorithms", School of Computer Science and Engineering, University of New South Wales: http://www.cse.unsw.edu.au/~lambert/java/3d/hull.html. The centers of the color clusters of a scene are considered as the most representative colors of this scene.

In the third step of the method according to the invention, for each of said scenes Si, a color transform Tᵢ is calculated using the same method as for a well-known image-dependent gamut mapping method. In this well-known image-dependent gamut mapping method, the calculation of the color transform is based on an image source color gamut and on a target color gamut. Here, the calculation of the color transform Tᵢ is based instead on the scene-based source color gamut G_{Si-source} and on the target color gamut. Such a calculation of the color transform Tᵢ is performed such that, for each of the scenes Si, source colors of all images or frames of this scene Si are mapped from its corresponding scene-based source color gamut G_{Si-source} into target colors such that they are included in the target color gamut. For each of the scenes Si, the same color transform Tᵢ is then applied to all source colors of all images or frames of this scene Si, in order to obtain the target colors. In other words, this mapping step corresponds to a scene-dependent color mapping applied to all images of a same scene instead of different image-dependent color mappings applied to each image of a scene in the prior art. To determine this mapping step, a same scene-based source color gamut G_{Si-source} is used for all images of a scene instead of a plurality of different image-based source color gamuts used separately for each image of this scene in the prior art.

The method according to the invention overcomes the drawback of frame-based gamut mapping methods, meanwhile takes maximum advantage of destination or target color gamut. Advantageously, using centers of color clusters to build scene-based source color gamuts might prevent a few colors from contributing to the gamut boundary hence giving rise to more compact scene-based source color gamuts.

Compared with device-dependent color gamut mapping methods, the color gamut mapping method according to the invention makes better use of whole target gamut, thus resulting in higher chroma. The target color gamut of the target display device is advantageously better exploited.

Compared with frame-based image-dependent color gamut mapping methods, the color gamut mapping method according to the invention avoids the color shifts (flicker) from frame to frame.

Most of gamut mapping algorithms are pixel-by-pixel mapping and ignore the spatial color relation between neighbouring pixels. This can lead to major perceived degradations in the details of the image. Spatial gamut mapping algorithms try to balance both color accuracy and preservation of details, by acting locally to generate a reproduction perceived as close to the original. Here, compared with spatial gamut color mapping methods, the color gamut mapping method according to the invention preserves advantageously the spatial relation between colors in a color space instead of image domain.

Figure 4 illustrates a simplified diagram of the color gamut mapping method of the invention. On the top left side of the figure, the video content is subsampled, then color clustered in order to build the different scene-based source color gamut ("source scene gamut"). On the top right side of the figure, the target color gamut ("target display gamut") is built. From each scene-based source color gamut ("source scene gamut") corresponding to a scene and the target color gamut ("target display gamut"), a color gamut mapping is determined, characterized by a specific LUT, which is then applied to all source colors of all frames of the corresponding scene, in order to get all target colors of these frames of this scene.

### Improvement of the invention

When applying scene-dependent gamut mapping as defined above to each scene of a video content, each mapped color of the scenes will get a final color gamut that is close or identical to the target color gamut and, as already stated above, the shape of the image gamut is not preserved. In such a situation, the temporal contrast between scenes, notably between the last frame of a scene and the first frame of the next scene, is lost. As the art motion picture temporal contrast may reflect part of the artistic intent of the Director of Photography, it may be very important to be able to preserve this temporal contrast.

An object of an improvement of the invention is to preserve this temporal contrast.

For this purpose, it is proposed to perform the third step of the above color gamut mapping method as follows.

First, the color mapping of each source color is performed along a mapping line anchored on an anchor point located on the grey line of the color space used for mapping. On figure 3 already mentioned, a mapping line L with an anchor point A is illustrated. The color space used for mapping is of the uniform-perceptual colorimetric type. Here, the Lab color space is used.

As previously described, the video content is divided in different scenes: here, let us assume we have eight scenes S1, S2, S3, S4, S5, S6, S7, S8, S9.

As previously described, scene-based source color gamuts G_{Si-source}, G_{S2-source}, G_{S3-source}, G_{S4-source}, G_{S5-source}, G_{S6-source}, G_{S7-source}, G_{S8-source}, G_{S9-source} are determined.

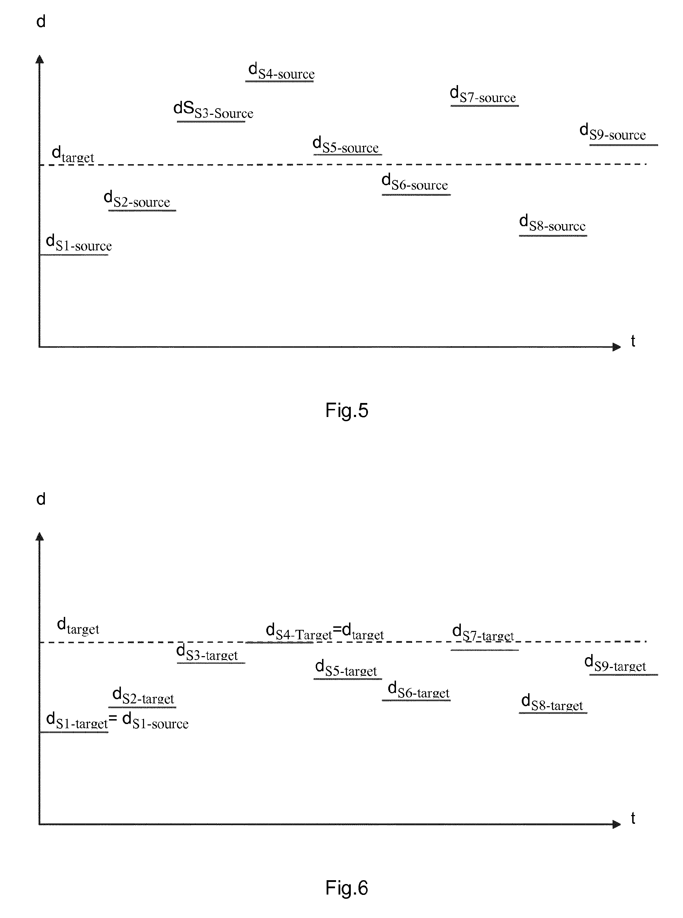

In this specific embodiment, on any mapping line anchored on an anchor point, let us determine the distribution of the positions of the boundaries of all scene-based source color gamut G_{S1-source}, G_{S2-source}, G_{S3-source}, G_{S4-source}, G_{S5}-_{source}, G_{S6-source}, G_{S7-source}, G_{S8-source}, G_{S9-source} on this mapping line. Such a distribution is represented on figure 5, where, for each successive nine scenes over time t, the distance d between the intersection of the mapping line with the boundary of the scene-based source color gamut and the anchor point of this mapping line is plotted, i.e. respectfully d_{S1-source}, d_{S2-source}, d_{S3-source}, d_{S4-source}, d_{S5-source}, d_{S6-source}, d_{S7-source}, d_{S8-source}, d_{S9-source}. This distribution is called "source color boundaries distribution" for this mapping line. This distribution show that all these distances are between a minimum distance dₘᵢₙ = d_{S1-source} from the anchor point and a maximum distance dₘₐₓ = d_{S4-source} from the anchor point.

Note that, on figure 5, the distance d_{target} between the anchor point and the intersection of the boundary of the target color gamut on the mapping line is also quoted as one long dotted line.

According to this specific embodiment, the following step is added : for each scene Si, determining a scene-based target color gamut G_{S1-target} such that, on any mapping line anchored on an anchor point, the positions of the boundaries of all scene-based target color gamut G_{S1-target}, G_{S2}-_{target}, G_{S3-target}, G_{S4-target}, G_{S5-target}, G_{S6-target}, G_{S7-target}, G_{S8-} target are distributed On this mapping line between the minimum distance dₘᵢₙ = d_{S1-source} from the anchor point and a maximum distance d_{target} as defined above, such that the target color boundaries distribution that is obtained on said mapping line is homothetic to the above source color boundaries distribution. Such a target color distribution is illustrated On figure 6 by d_{S1-target}, d_{S2}-_{target}, d_{S3-target}, d_{S4-target}, d_{S5-target}, d_{S6-target}, d_{S7-target}, d_{S8-target}, d_{S9-target}. We have d_{S1-target} = dₘᵢₙ = d_{S1-source} and d_{S4}-target = d_{target}. According to this homothetic property, we have the relationship: (d_{Si-source} - dₘᵢₙ)/ (d_{Si-target} - dₘᵢₙ) = (dₘₐₓ - dₘᵢₙ)/ (d_{target} - dₘᵢₙ).

In this specific embodiment, for each of the scenes Si, a color transform Tᵢ is calculated according to the well-known image-dependent gamut mapping method, based on the scene-based source color gamut G_{Si-source} as previously described in the main embodiment and, specifically to this embodiment, based on the corresponding scene-based target color gamut G_{Si-target} as previously defined. Such a calculation of the color transform Tᵢ is performed such that, for each of the scenes Si, source colors of all images or frames of this scene Si are mapped from its corresponding scene-based source color gamut G_{Si-source} into its corresponding scene-based target color gamut G_{Si-target} such that they are included in this scene-based target color gamut G_{Si-target}. As in the previous embodiment, for each of the scenes Si, the same color transform Tᵢ is then applied to all source colors of all images or frames of this scene Si, in order to obtain the target colors.

Due to the homothetic relationship between the source color boundaries distribution and the target color boundaries distribution, the color gamut mapping method according to this improvement of the invention tends to maintain temporal contrast between the different scenes of a video content. Compared with all previous color gamut mapping methods, this improved color gamut mapping method associates the development of the destination color gamut to the source color gamut, thus is advantageously able to sustain in a way the shape of source color gamut during color mapping.

It is to be understood that the invention may be implemented in various forms of hardware, software, firmware, special purpose processors, or combinations thereof. The invention may be notably implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

## Claims

1. Method of color gamut mapping source colors of images of a video content into target colors, comprising the steps of:
- dividing said video content into a plurality of successive scenes (S1, S2, ..., Si, ..., S_{N});
- for each of said scenes (Si), determining a corresponding scene-based source color gamut (G_{Si-source}) such that it comprises all representative source colors that are defined as being representative of all source colors of all images comprised in said scene (Si) and such that its boundary correspond to the maxima of said representative source colors;
- for each of said scenes (Si), mapping source colors of all images of said scene (Si) from its corresponding scene-based source color gamut (G_{Si-source}) into target colors such that they are included in a predetermined target color gamut.

2. Method of color gamut mapping according to claim 1, wherein the step of dividing said video content into successive scenes (S1, S2, ..., Si, ..., S_{N}) is performed through scene cuts detection.

3. Method of color gamut mapping according to any one of the preceding claims, comprising, for the determination of scene-based source color gamut (G_{Si-source}), a step of subsampling the pixels of all images included in said scene (Si).

4. Method of color gamut mapping according to claim 3, comprising, a step of color clustering the source colors of said subsampled pixels of all images including said scene (Si) such as to define source color clusters for said scene, each source color cluster having a cluster centered color defined as being positioned at the center of this source color cluster, wherein the determination of scene-based source color gamut (G_{Si-source}) is performed such that it comprises all cluster centered colors of defined source color clusters of said scene (Si) and such that its boundary corresponds to the maxima of these cluster centered colors.

5. Method of color gamut mapping according to any one of the claims 1 to 2, comprising, a step of color clustering the source colors of the pixels of all images including said scene (Si) such as to define source color clusters for said scene, each source color cluster having a cluster centered color defined as being positioned at the center of this source color cluster, wherein the determination of scene-based source color gamut (G_{Si-source}) is performed such that as it comprises all cluster centered colors of defined source color clusters of said scene (Si) and such as its boundaries correspond to the maxima of these cluster centered colors.

6. Method of color gamut mapping according to claim 4 or 5, wherein said color clustering is of the partitional type.

7. Method of color gamut mapping according to any one of the preceding claims, wherein said color mapping is performed in a perceptually-uniform color space.

8. Method of color gamut mapping according to claim 7,
- wherein said color mapping of each source color is performed along a mapping line anchored on an anchor point located on the grey line of said color space,
- wherein said method comprises, for each of said scenes (Si), the step of determining a scene-based target color gamut (G_{Si-target}) such that, on any mapping line anchored on an anchor point, the source color boundaries distribution of the positions of the boundaries of all scene-based source color gamut (G_{S1-source}, G_{S2-source}, ..., G_{Si-source}, ..., G_{SN-source}) on said mapping line between a minimum distance from the anchor point and a maximum distance from the anchor point being determined, the positions of the boundaries of all scene-based target color gamut (G_{S1-target}, G_{S2-target}, ..., G_{Si-target}, ..., G_{SN-target}) are distributed on said mapping line between said minimum distance from the anchor point and a maximum distance corresponding to the distance between said anchor point and the intersection of the boundary of the target color gamut on said mapping line, such that the target color boundaries distribution that is obtained on said mapping line is homothetic to said source color boundaries distribution, and
wherein, for each of said scenes (Si), said color mapping of each source color is performed such that the target colors are included in the determined scene-based target color gamut (G_{Si-target}) corresponding to said scene (Si).

9. Color gamut mapping device adapted to map source colors of images of a video content into target colors, comprising :
- means for dividing said video content into a plurality of successive scenes (S1, S2, ..., Si, ..., S_{N});
- means for determining, for each of said scenes (Si), a corresponding scene-based source color gamut (G_{Si-source}) such that it comprises all representative source colors that are defined as being representative of all source colors of all images comprised in said scene (Si) and such that its boundary correspond to the maxima of said representative source colors;
- means for mapping, for each of said scenes (Si), source colors of all images of said scene (Si) from its corresponding scene-based source color gamut (GS_{i-source}) into target colors such that they are included in a predetermined target color gamut.
